# EUROPEAN PATENT APPLICATION

(11) **EP 1 481 765 A1**
(43) Date of publication of application: **01.12.2004**
(21) Application number: 04012569.2
(22) Date of filing: 27.05.2004
(51) Int. Cl.: B24D 15/06, A63C 11/06, B23D 67/12

(54) **Sharpening device for ski and snowboard edge strips**

(30) Priority: 28.05.2003 IT MI20031069
(71) Applicant: Carini, Ulisse, 29100 Piacenza (IT)
(72) Inventor: Carini, Ulisse, 29100 Piacenza (IT)
(74) Representative: Marietti, Giuseppe

(57) **Abstract**

The present invention relates to a device for preparing blades for skis and snowboards. More in particular, the invention relates to a device for the removal of phenol, the preparation of the tuning angle and of the angle of the side blades. The device enables various types of tools to be clamped in a vice (M) hinged to a base (2) designed to slide on a ski. The tools (23,26,28) can be clamped in the vice in a longitudinal (L) or transverse (T) direction, and in the first case the vice bends the tools towards the surface to be worked on. The device may moreover be fitted to a sliding bracket (31,32) on the underside of the ski.

## Description

The present invention relates to a device for preparing blades (edge strips) for skis and snowboards. More in particular, the invention relates to a device for removing phenol and preparing the tuning angle and the angle of the side blades.

Modern skis are provided with a blade that extends both on the surface of the underside and on the side of the ski. The blade is made of metal and is supported by a layer of resin, generally phenol. The angle comprised between the surface of the blade on the surface of the underside and the surface of the blade on the side of the ski is referred to as angle of the blades.

It is known the need to re-set the correct angle of the ski blades when the blades are worn so as to guarantee an adequate grip of the skis or of the snowboards on the snow both in the case where the skis or snowboards are used for competitions and in the case where they are used for pleasure.

Traditionally, the angle of the blades is restored manually using a plurality of tools, in a number of successive steps. Substantially, the technique traditionally adopted provides that the ski to be prepared will be fixed horizontally on supports. An operator carries out tuning, removes phenol and files the blades to obtain the desired angle.

Tuning is the intervention that provides removal of a layer of the blade on the surface of the underside, i.e., the surface of the ski that rests on the snow, in order to render the ski readily manoeuvrable. In general, tuning is carried out manually by an operator, who, by means of a set of files, removes part of the blade at its side edges. In the final steps of the intervention, the operator can moreover use diamond files in order to obtain a high-quality surface finish of the blade.

A further operation that the operator must perform in order to prepare the blades is partial removal of the resin on which the blade is installed. Generally, said resins are referred to by the term "phenol" even when the resin used for the construction of the skis is of a different type. The intervention on the phenol provides removal of part of the resin from the sides of the skis. The tool used by the operator is called phenol-remover. This intervention must be performed by the operator via successive removals of material and consequently requires a continuous check on the surface worked on, this being a somewhat slow operation.

The final intervention that is performed in preparation of the blades is the definition of the angle comprised between the surface of the blade on the surface of the underside and the surface on the side of the ski. Also in this case the operator uses a set of files in order to obtain the desired angle and the proper surface finish of the blades. Generally, the angle is comprised between 86° and 89° and varies according to the use which the ski is intended to.

The tools traditionally used for preparation of the blades present a series of drawbacks. In the first place, in fact, there is a large number of them. This involves the need for adequate storage, maintenance and replacement of each of the tools used.

Furthermore, each tool traditionally employed requires, for its use, specific skills and experience on the part of the operator.

A further drawback is represented by the fact that traditionally the precision in the preparation of the blades depends upon the expertise of the operator given that each of the tools used does not individually guarantee a qualitative standard.

A device used for preparation of the angle of the blades is described in the U.S. patent No. US 62660441. Said device is provided with a vice designed to clamp a file in a longitudinal direction with respect to the direction of sliding of the device itself on the blade of the ski. In particular, the file can be positioned according to four different and pre-defined angles with respect to a surface of sliding of the device on the ski. The device does not allow for the tuning or the removal of the phenol.

A purpose of the present invention is to provide a single device for preparing ski blades that will enable the operations which are carried out into the known art by way of interchangeable tools.

A further purpose of the invention is to provide a device for preparing ski blades that will be easy to use even by unskilled persons and that will enable high standards of precision to be achieved.

In addition, the purpose of the invention is to provide a device for preparing ski blades that will be practical, inexpensive, manageable, and that will enable major reductions in the times traditionally necessary for achieving of the desired results.

The above and yet other purposes are achieved by the device according to the invention, which comprises a vice hinged to a base, said base being provided with a plane surface designed to slide on a ski, and further comprises means for varying the angle between the vice and said plane surface, the device being characterized in that the vice is provided with means for clamping at least one tool in a first longitudinal direction with respect to said plane surface, in which said tool is curved for at least part of its length towards said plane surface, or in a second transverse direction with respect to said plane surface, in which said tool lies on a plane.

Advantageously, the device according to the invention enables removal of the phenol, preparation of the tuning angle and of the angle of the side blades to be carried out by simply using the most suitable tool for the operation to be performed. A characteristic of the invention is the possibility of clamping the tools in the vice both in a direction longitudinal with respect to the plane surface, in such a way as to enable working of the side of the blades and removal of the phenol, and in a direction transverse to said surface, in such a way as to enable definition of the tuning angle.

According to a further characteristic of the invention, the tools gripped longitudinally in the vice are curved by the vice itself towards the sliding surface.

Furthermore, the device according to the invention can be fitted to a bracket having the function of guiding the device on the underside of a ski or snowboard and extending the surface of the device that can be handled by the operator.

The invention solves various problems of the known art. The device according to the invention, in fact, is a single device that enables all the steps of preparation of ski blades to be carried out by providing interchangeability of the tools to be clamped in the vice. This solves the problem of the use of different tools, each tool for a distinct step of the preparation of the blade.

The device according to the invention further allows for performing all the steps of preparation of the blades with high precision, in particular as regards the angle that it is intended to obtain between the blades, without any particular experience being required to the operator and in times that are markedly reduced with respect to those of the known art.

A further advantage of the device according to the invention is to enable working on the ski blades to be carried out, by operating with a file clamped in a longitudinal direction in the vice, i.e., parallel to the blade to be worked on, without the ends of the file itself interfering with the ski, even in the case of skis of a shaped type, thus enabling long passes of the tool.

Further details of the invention will be understood from the detailed description of a preferred, but non-exclusive, embodiment of a device for preparing ski blades according to the invention, illustrated by way of indicative, but non-limiting, example in the attached sheets of drawings, in which:
- Figure 1 is a front view of the device according to the invention;
- Figure 2 is a perspective view from beneath of the device illustrated in Figure 1 fitted to a supporting bracket;
- Figure 3 is a perspective view of the rear part of the device illustrated in Figure 1;
- Figure 4 is a side view of the device illustrated in Figure 1 provided with a smoothing tool;
- Figures 5a-5d are four views of the bottom jaw of the vice of the device illustrated in Figure 1;
- Figures 6a-6c are three views of the top jaw of the vice of the device illustrated in Figure 1;
- Figures 7a-7d are four views of the base of the device illustrated in Figure 1;
- Figures 8a-8c are three views of a supporting bracket which can be fitted to the device illustrated in Figure 1; and
- Figure 9 illustrates a screw of the device represented in Figure 1.

In general, the device according to the invention comprises a base, hinged to which is a vice comprising two jaws that can clamp the various types of tools traditionally used for preparing ski blades. The device further comprises means for varying the angle between the vice and the base. In what follows, the term "tool" will be used to indicate any of the tools traditionally used for preparation of ski blades, such as files of various kinds, phenol-removers, files for smoothing, etc.

With reference to the attached figures, there is illustrated a device 1 according to the invention, comprising a base 2 and a vice M.

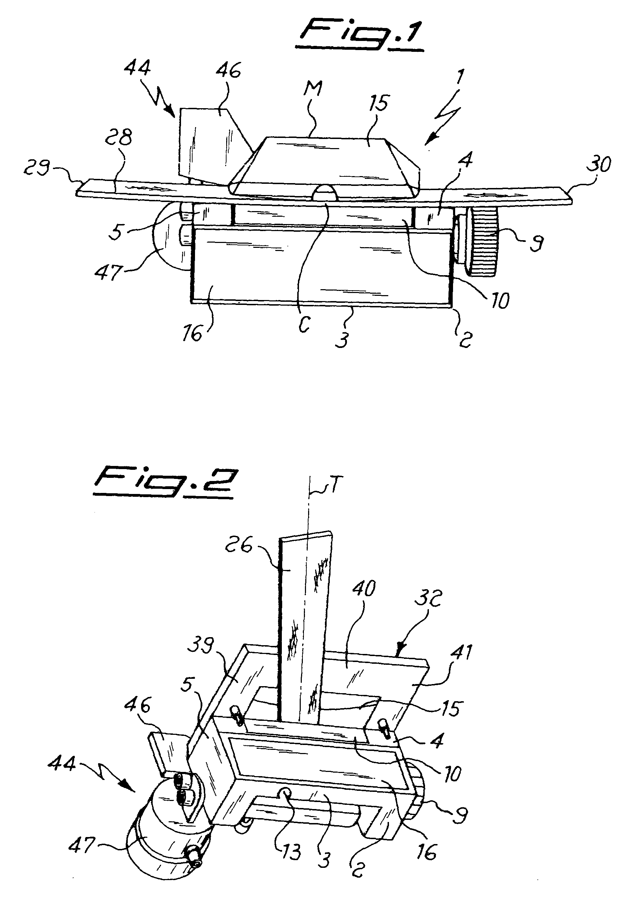

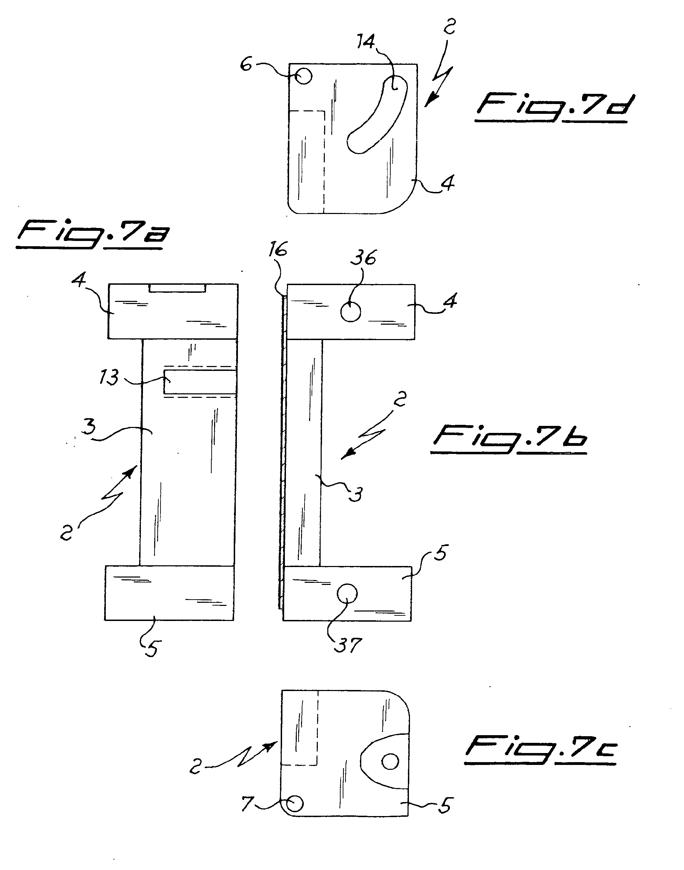

The base can in general be made of different types of materials and with different shapes. Preferably, the base is made of aluminium and has a U-shaped profile so as to be able to receive the vice in its central portion. Furthermore, the base is provided with a contrast and sliding surface, on which the ski is intended to slide during the various steps of working on the blades. Said sliding surface can be made of a single piece with the base or else fixedly fitted thereto. Preferably, the sliding surface is obtained by applying a plate made of wear-resistant material on an outer portion of the base. In the embodiment illustrated (Figures 1-4 and 7a-7d), the base 2 is made of aluminium and comprises a central portion 3 and two side walls 4, 5 forming a right angle with the central portion 3. Present on the side walls 4 and 5 are the hinges 6, 7 designed to enable fitting of the vice M in an intermediate position between the walls 4, 5. On one side of the base 2 there is present a ground plate 16 made of an alloy of steel and loctite, on which a ski or a snowboard is intended to slide.

The vice M in general comprises two jaws and has the purpose of housing, by clamping them in a given direction among the various possible ones, different types of tools (in an interchangeable way and one at a time) in such a way that the tools will be able to act on the ski when the latter slides on the sliding surface provided on the base 2. In particular, the vice M enables a tool to be clamped in a direction parallel to the direction of sliding of the ski on the sliding surface 16 of the base 2 (referred to as longitudinal direction), or else in a direction substantially transverse to said direction of sliding of the ski (referred to as transverse direction). The vice M can in general clamp a tool in a transverse direction, said transverse direction being incident to the longitudinal direction according to a variable angle, in any case an angle smaller than 100°.

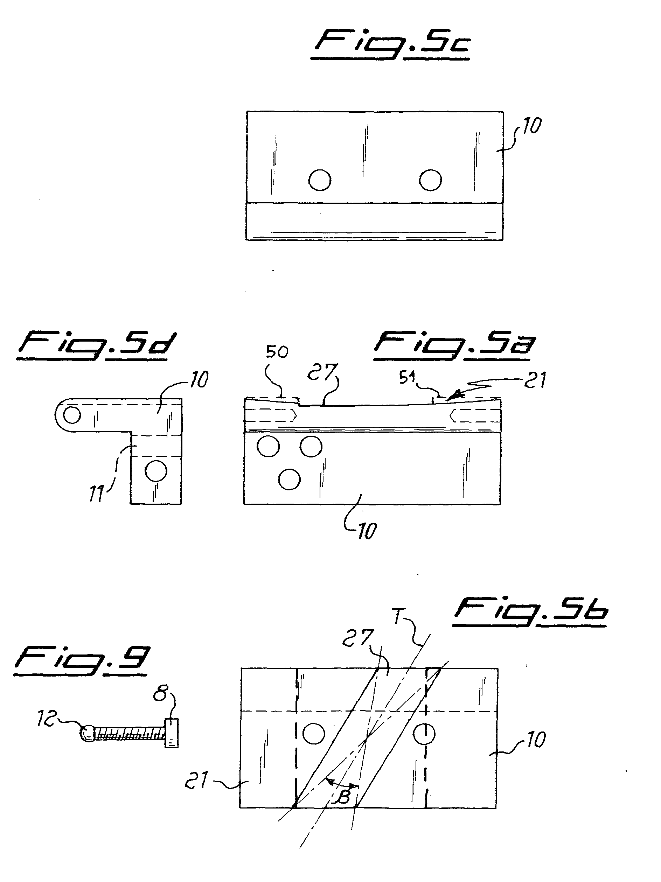

In the embodiment illustrated (Figures 1-4, 6a-6c, 5a-5d), the vice M consists of a bottom jaw 10 and a top jaw 15, which can be fitted via the screws 17, having the purpose of tightening the jaws 10 and 15 against one another with a pressure sufficient to clamp a tool set between them. In the attached drawings, the aforementioned longitudinal direction is designated by the letter L, and the transverse direction by the letter T, the latter being variable according to an angle β (Figure 5b). The top jaw 15 has, on its bottom surface 18, two projections 19, 20 having the function of bearing upon the top surface 21 of the bottom jaw 10. Between the projections 19 and 20 there is a passage 22 having the purpose of enabling insertion of a tool in a transverse direction between the jaws 10 and 15, for example a file of the type designated in Figure 2 by the reference number 26. In order to clamp in the vice M files having a cylindrical shape, as in the case of the smoothing tool 23 illustrated in Figure 4, the jaw 15 has, on the surface 18, a flared portion 25 having a circular profile. The flared portion 25 itself can receive a phenol-removing tool. In the particular embodiment illustrated, the flared portion 25 extends in a direction orthogonal to the longitudinal direction L. The top surface 21 of the jaw 10 has a flat portion 27 that defines the resting surface for the tools held in the vice M in the transverse direction T.

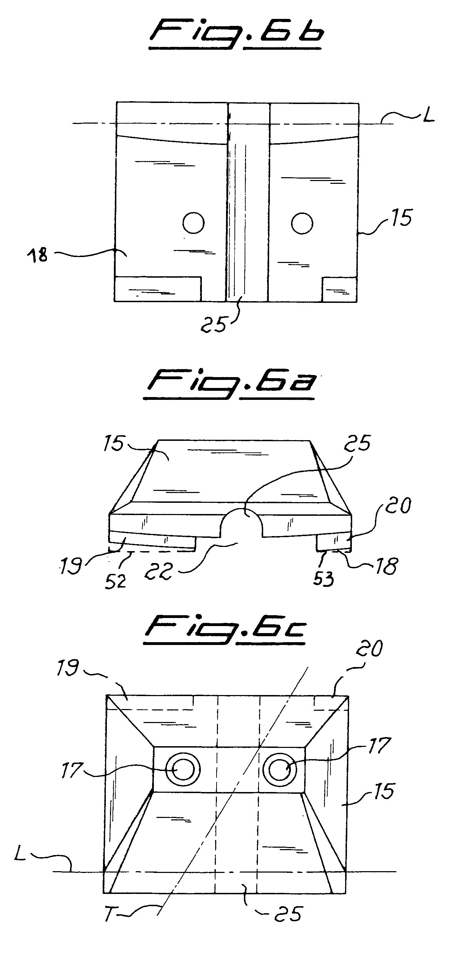

Alternatively, the jaws 10 and 15 may envisage appropriate projections from the profile plane 50, 51, 52, 53 (shown hatched in Figures 5a and 6a) designed to bend the tool clamped between the jaws themselves.

In general, when a tool is tightened in the vice M, at least one part of the tool itself must project from the part of the sliding surface of the base so as to act on a ski that slides on said surface.

A characteristic of the device according to the invention is in general that to provide the bending of the tools held in the vice M in a longitudinal direction L. Bending is in general obtained by curving the tool clamped in the vice M so as to bestow thereon a convex profile having the lowest point directed towards the sliding surface of the base 2. A tool installed in a longitudinal direction must in any case present a portion projecting beyond the plane of the sliding surface. In general, the device according to the invention can provide various methods to obtain said bending. For example, the jaws 10, 15 of the vice M can be shaped according to a triangular profile, or else the top jaw 15 can be provided with a projection on its bottom surface 18 in a position corresponding to a cavity on the top surface 21 of the bottom jaw 10 so as to apply a bending load on a tool, for example a file. According to the preferred embodiment, the jaws 10 and 15 of the vice M are shaped so as to present a convex profile.

The device 1 can also provide the use of tools in themselves curved or ones which have a curved surface in order to obtain the same effect obtained by the jaws 10 and 15.

In particular, in the embodiment illustrated (Figures 1, 5a-5b, 6a-6b), both the top surface 21 of the bottom jaw 10 and the bottom surface 18 of the top jaw 15 have a convex profile. When the jaws 10, 15 are clamped on a tool, this is forced to assume the same curvature as that of the surfaces 21 and 18. Figure 1 shows in detail the case of a file 28, gripped in the vice M in a longitudinal direction L, which is bent towards the plate 16, on which a ski (not illustrated) is designed to slide. By clamping the bent file 28, it is possible to slide the device 1 on a ski in a position corresponding to the plate 16 so that just a central part C of the file 28 (Figure 1) may come into contact with the ski and carry out removal of material from one of its blades. This arrangement enables the operator using the device according to the invention 1 to perform long passes on the blade of a ski even in the case where the ski is of a shaped type, hence preventing the free ends 29, 30 from interfering with the ski itself, with consequent detrimental sticking event.

The device 1 is in general provided with means for varying continuously and with a given precision the angle between the vice M and the base 2, and with means for clamping the vice M and the base 2 at a given angle between the elements 2 and 3 themselves. By "angle between the vice M and the base 2" is meant the angle comprised between the plane defined by the sliding surface 16 and the plane tangential to the top surface 21 of the bottom jaw 10, designated by the reference letter α. For example, the vice M and the base 2 can be fitted not only with the hinges 6 and 7 but also with a set of gears, etc. operating in pre-defined positions. In the embodiment illustrated, there is present a screw 8 (Figure 9), which engages the hole 11 of the bottom jaw 10 of the vice M and projects towards the base 2. In particular, the screw 8 is provided with a spherical terminal portion 12, designed to be fitted to an appropriate flared portion 13 made in the central portion 3 of the base 2, the screw 8 having the function of contrast element. The flared portion 13 has a circular cross section so that the head 12 of the screw 8 may slide and rotate inside the flared portion 13 but cannot be extracted therefrom except at one of its ends. Consequently, by acting on the screw 8, screwing it in the bottom jaw 10 or unscrewing it, there is obtained, respectively, a decrease or an increase of the angle α; i.e., the angle a can be varied continuously, and not exclusively according to pre-defined values. In order to immobilize the vice M and the base 2 in a given relative position for the time desired, the device 1 illustrated is provided with a clamping knob 9 fixedly fitted to the bottom jaw 10 of the vice M by means of a pin (not illustrated). Said pin traverses the side wall 4 of the base 2, being inserted in an elongated hole 14 having a profile shaped like the arc of a circumference so as to enable displacement of the pin inside it following upon a rotation of the jaw 10 (and hence of the vice M) with respect to the base 2. By screwing the knob 9, this rests on the outer surface of the side wall 4 of the base 2 and exerts a pressure that prevents displacement of the vice M with respect to the base 2, and the angle α is thus fixed to the value defined by the relative position at that moment occupied by the vice M and the base 2. Unscrewing the knob 9, the vice M and the base 2 remain constrained not only by the hinges 6 and 7 but also by the screw 8, and it is thus possible to act on the screw 8 to bring the angle α to a value different from the previous one.

The device according to the invention may moreover be fitted to a bracket having the function of guiding the device 1 on the underside of a ski or snowboard during the step of preparation of the tuning angle. In general, said bracket is fixedly fitted to the base 2 of the device 1 so that the plane of the bracket will be orthogonal to the plane of the sliding surface, and presents a portion designed to slide on the underside. The bracket is shaped so as to enable a tool, transversely clamped in the vice M, to operate on the blade also for values of the angle α slightly higher than 90°, which are typical tuning values. Consequently, even though the bracket forms a right angle with the base, the bracket itself has means for enabling slight rotations of the tool clamped in the vice M when the vice M rotates with respect to the base 2 for increasing values of the angle α beyond 90°. According to the preferred embodiment, the bracket has a substantially trapezial shape, is fixedly fitted to the top surface of the side walls 4, 5 of the base 2 and surrounds the top jaw 15 of the vice M.

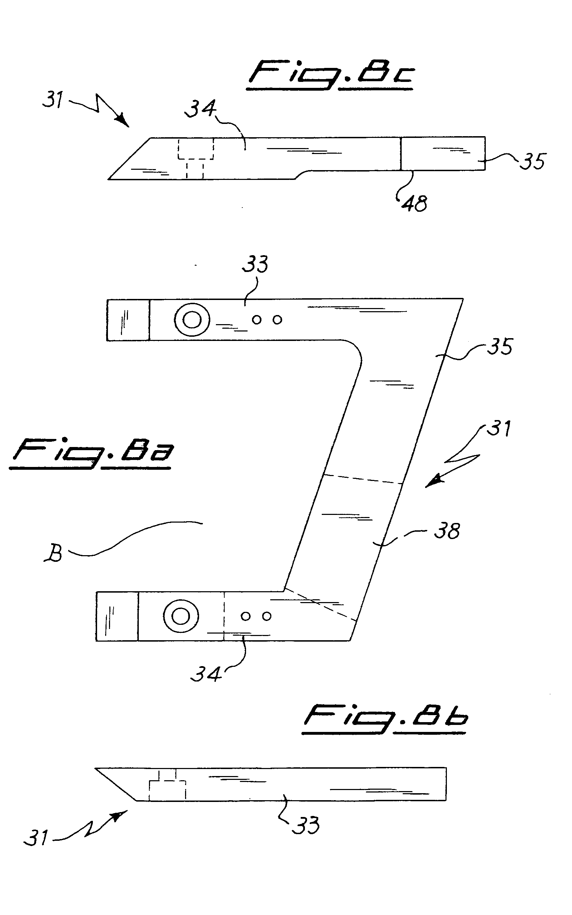

Figures 8a-8c illustrate a bracket 31 according to the preferred embodiment. The bracket 31 is provided with three sides 33, 34, 35. The sides 33 and 34 are fitted, respectively, to the top surfaces of the side walls 4 and 5 of the base 2 by means of screws (not illustrated) that engage in the holes 36, 37. Consequently, when the bracket 31 is fitted to the device 1, the vice M is free to rotate in the area B of the bracket comprised between its three sides 33, 34, 35. In particular, the side 35 projects beyond the portion 3 of the base 2 above the plate 16. Present on the bottom surface of the side 35 is a groove 38. The groove 38 functions as contrast and end-of-travel surface for the tool gripped transversely in the vice M, when the vice M rotates with respect to the base 2 according to values of the angle α greater than approximately 90°. The side 35 has the further function of enabling the operator of the device 1 to apply pressure with his hand on the tool. The bracket 31 is installed on the device 1 for carrying out tuning. Consequently, the tool used is in general a file that is to act on the surface of the blade present on the underside of the skis, or of the snowboard, with values of the angle α for example equal to 91-92°. The file then passes into the groove 38, between the file and the groove 38, there being present a play that enables the file to reach said values of the angle α with respect to the plate 16. When the operator slides the device 1 on the underside, there is contact between the underside itself and the device in a position corresponding to the tool and the bottom surface 48 of the side 33.

Figure 2 illustrates a device 1 according to the invention, fitted to a second type of bracket 32 which has a C-shaped profile and the sides of which are designated by the reference numbers 39, 40, 41. In this case, the vice M clamps a file 26 in a transverse direction. During preparation of the tuning angle, the device 1 is made to slide on the underside of the ski or snowboard, and the bottom surface of the side 41 slides on said underside, affording greater stability for the file 26.

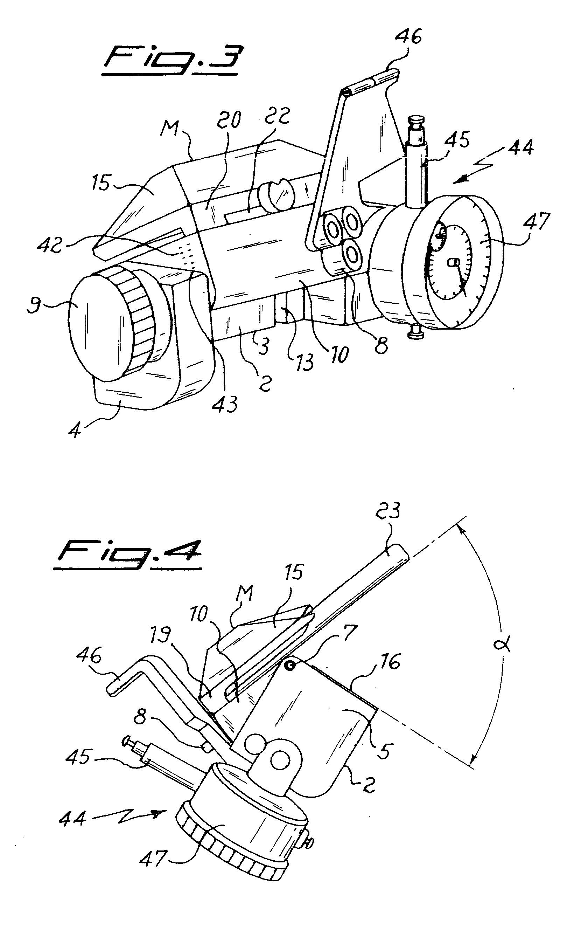

The device 1 may in general be associated to devices for detection and display of the angle α. For instance, the device 1 can be provided with a graduated scale visible on an element of its own, or else can be fitted to a traditional analog or digital detection device provided with a display. Illustrated in Figure 3 is a device according to the invention 1 provided with a graduated scale 42 etched on a side of the bottom jaw 10 of the vice M. By rotating the vice M with respect to the base 2, the sharp edge 43 of the side wall 4 functions as index of the scale 42, so enabling reading of the angle α. Figures 1-4 show the device 1 coupled to a detector 44 of the angle α associated to the base 2, said detector 44 being provided with a feeler pin 45 acting on an appropriate bracket 46 fixed to the bottom jaw 10. The feeler pin detects the position of the bracket 46 with respect to the base 2. The detector 44 is further provided with the analog display 47, which indicates the value of the detected angle α.

In general, the operation of the device 1 provides that the operator will clamp, in the vice M, a tool that depends upon the operation to be carried out on the ski. The tool can be clamped in a longitudinal direction L or else in a transverse direction T. Subsequently, the operator, by acting on the screw 8, adjusts the angle α to the desired value and clamps the vice M in that position by tightening the knob 9 on the base 2. At this point, the device 1 is gripped by the operator, who slides it on the ski to be worked on, taking care that the ski itself will slide on the plate 16. In this way, the tool installed operates on the ski according to the angle α chosen by the operator. The various steps of the preparation of the blades are performed by tightening the tool suitable for each step in the vice M and choosing the most appropriate angle α to obtain the angle desired for the blade.

## Claims

1. A device (1) for preparing skis or snowboards blades, comprising a vice (M) hinged to a base (2), said base (2) being provided with a plane surface (16) designed to slide on a ski or snowboard, and further comprising means (8, 9, 13) for varying the angle (α) between the vice (M) and said plane surface (16), said device being **characterized in that** the vice (M) is provided with means (10, 15) for clamping at least one tool (23, 26, 28) in at least one first longitudinal direction (L) with respect to said plane surface (16), where said at least one tool (23, 26, 28) is curved for at least part of the its length towards said plane surface (16) or in at least one second transverse direction (T) with respect to said plane surface (16), in which said at least one tool (23, 26, 28) lies on a plane.

2. The device (1) for preparing skis or snowboards blades according to Claim 1, in which said means (10, 15) for clamping at least one tool (23, 26, 28) comprise two jaws (10, 15) at least in part shaped according to a convex profile.

3. The device (1) for preparing skis or snowboards blades according to Claim 2, in which said jaws (10, 15) have said convex profile in a longitudinal direction (L).

4. The device (1) for preparing skis or snowboards blades according to Claim 1, in which said means (10, 15) for clamping at least one tool (23, 26, 28) comprise two jaws (10, 15) provided with non-superimposable projections (50, 51, 52, 53) designed to curve said at least one tool (23, 26, 28).

5. The device (1) for preparing skis or snowboards blades according to any one of the preceding claims, in which said jaws (10, 15) have at least one flat portion (25, 27) in said at least one transverse direction (T).

6. The device (1) for preparing skis or snowboards blades according to any one of the preceding claims, in which the base (2) can be fixedly fitted to a bracket (31, 32), for sliding on the underside of a ski or snowboard, said bracket projecting at right angles above said plane surface (16) and being provided with means (35, 38, 40) for enabling rotation upwards of a tool (23, 26, 28) clamped in the vice (M) in said at least one transverse direction (T).

7. The device (1) for preparing skis or snowboards blades according to any one of the preceding claims, in which said means (8, 9, 13) for varying the angle (α) between said vice (M) and said plane surface (16) comprise a screw (8), which can be engaged for at least part of its length in the vice (M) and provided with an end (12), which can be slidably fitted to a guide (13) made in the base (2).

8. The device (1) for preparing skis or snowboards blades according to any one of the preceding claims, **characterized in that** said angle (α) between the vice (M) and said plane surface (16) can be varied continuously.

9. The device (1) for preparing skis or snowboards blades according to any one of the preceding claims, **characterized in that** it further comprises means (42, 43, 44) for indication of the angle (α) between the vice (M) and the plane surface (16).
